# EUROPEAN PATENT APPLICATION

(11) **EP 4 560 735 A1**
(43) Date of publication of application: **28.05.2025**
(21) Application number: 23851771.8
(22) Date of filing: 07.08.2023
(51) Int. Cl.: H01M 4/58, H01M 10/0525, C01B 25/45

(54) **BATTERY MATERIAL AND MANUFACTURING METHOD THEREFOR, AND SECONDARY BATTERY**

(30) Priority: 10.08.2022 CN 202210959434
(71) Applicant: BYD Company Limited, Shenzhen, Guangdong 518118 (CN)
(72) Inventor: ZHANG, Yadong, Shenzhen, Guangdong 518118 (CN); JIN, Lina, Shenzhen, Guangdong 518118 (CN); LI, Xiangyu, Shenzhen, Guangdong 518118 (CN); YIN, Xiaoqiang, Shenzhen, Guangdong 518118 (CN)
(74) Representative: Taor, Simon Edward William
(86) International application number: PCT/CN2023/111477
(87) International publication number: WO 2024/032550

(57) **Abstract**

A battery material and a manufacturing method therefor, and a secondary battery. The molecular general formula of the battery material comprises A₃V₂₋ₓEₓ(P_{1-y}L_{y}O₄)₃, wherein the element E represents a doping element that replaces the element V, and comprises at least one of a transition metal element, a rare earth element, Mg, and Sr; the element L represents a doping element that replaces the element P, and comprises at least one of B, Al, Ga, Si, Ge, and Sn; the element A represents an alkali metal element; 0≤x≤1 and 0<y≤1/3; and when the element L is the element B, x is not 0.

## Description

### CROSS-REFERENCE TO RELATED APPLICATION

This application claims priority to and benefits of Chinese Patent Application No. 202210959434.9, filed on August 10, 2022. The entire content of the above-referenced application is incorporated herein by reference.

### FIELD

The present disclosure relates to the field of battery technologies, and specifically to a battery material and a preparation method therefor, and a secondary battery.

### BACKGROUND

Battery materials such as electrode materials and solid electrolyte materials are key components of batteries and have a significant impact on battery performance. Using a sodium-ion battery as an example, a Na₃V₂(PO₄)₃ material, which is a fast ion conductor material for three-dimensional ion channels, is often used as a positive electrode material or solid electrolyte due to its potential advantages such as stable crystal structure, adjustable working voltage, and high theoretical specific capacity. However, such materials have problems such as low electronic conductivity and low charging and charging voltage plateaus.

In the related art, the problems of the materials are generally solved by doping and modification. However, doping schemes currently commonly in the industry have a limited effect in improving the electrochemical performance of the materials.

### SUMMARY

Therefore, the present disclosure provides a battery material. The material can effectively improve the charging and discharging voltages and electronic conductivity of the material by doping anionic phosphorus sites of vanadium phosphate of alkali metal.

A first aspect of the present disclosure provides a battery material, a general molecular formula of the battery material including A₃V₂₋ₓEₓ(P_{1-y}L_{y}O₄)₃, where the element E represents a doping element that substitutes the element V, and includes one or more of a transition metal element, Mg, and Sr; the element L represents a doping element that substitutes the element P, and includes one or more of B, Al, Ga, Si, Ge, and Sn; the element A represents an alkali metal element; x and y respectively represent a molar percentage of the element V substituted by the doping element and a molar percentage of the element P substituted by the doping element, where 0 ≤ x < 1, and 0 < y ≤ 1/3; and when the element L is an element B, x is not 0.

The electronegativity of each element L is less than that of the element P, and after substituting part of the element P, the doping element L can cause a valence state change of O atoms originally connected to the element P, so that the structure of the polyanionic group LO₄^{m-}(where m- is the overall charge of the polyanionic group, m > 0) formed by L and O atoms shrinks. Therefore, the unit cell structure of the compound A₃V₂(P_{1-y}L_{y}O₄)₃ shrinks, and the total energy of the unit cell structure decreases, so that the working voltage of the material can be increased. In addition, the shrinkage of the unit cell structure is beneficial to improving the structural stability of the material, and is also beneficial to improving the cycle performance of the material. In addition, the doping of the element L at the phosphorus site can excite and induce the element V to undergo a redox reaction at a high potential, thereby further increasing the working voltage of the material, and increasing the energy density of the material. In addition, the doping of the element L at the phosphorus site can reduce the band gap value of the compound A₃V₂(P_{1-y}L_{y}O₄)₃ and improve the electronic conductivity of the material. In addition, controlling the doping amount of the element L within an appropriate range can enable the material to have high charging and charging voltage plateaus and good electronic conductivity while ensuring good structural stability of the material.

In some embodiments, the element L includes at least one of Si, Ge, and Sn.

In some embodiments, the transition metal element includes at least one of Fe, Cr, Mn, Co, Ti, Ni, Cu, Zn, Mo, Nb, and Zr; and the rare earth element includes at least one of La and Ce.

In some embodiments, a value range of x is: 0.1 ≤ x ≤ 1.

In some embodiments, a value range of y is: 1/18 ≤ y ≤ 1/3.

A second aspect of the present disclosure provides a preparation method for a battery material, including:
weighing an A source, a vanadium source, an E source, a phosphorus source, and an L source according to a general molecular formula A₃V₂₋ₓEₓ(P_{1-y}L_{y}O₄)₃ of a battery material to be prepared, and mixing the sources to obtain a precursor material, where the element E represents a doping element that substitutes the element V, and includes one or more of a transition metal element, a rare earth element, Mg, and Sr; the element L represents a doping element that substitutes the element P, and includes one or more of B, Al, Ga, Si, Ge, and Sn; the element A represents an alkali metal element; 0 ≤ x < 1, and 0 < y ≤ 1/3; and when the element L is an element B, x is not 0; and
calcining the precursor material to obtain the battery material.

The preparation method has the advantages of simple process and high controllability, and can realize large-scale industrial preparation.

In some embodiments, conditions of the calcining include: calcining the precursor material under an inert gas atmosphere at 400°C to 900°C for 10 h to 30 h.

In some embodiments, the inert gas includes at least one of argon, nitrogen, and helium.

In some embodiments, the mixing includes a solid phase mixing method or a sol-gel method.

In some embodiments, the element L includes at least one of Si, Ge, and Sn.

In some embodiments, the transition metal element includes at least one of Fe, Cr, Mn, Co, Ti, Ni, Cu, Zn, Mo, Nb, and Zr; and the rare earth element includes at least one of La and Ce.

In some embodiments, a value range of x is: 0.1 ≤ x ≤ 1.

In some embodiments, a value range of y is: 1/18 ≤ y ≤ 1/3.

A third aspect of the present disclosure provides a secondary battery, including the battery material according to the first aspect of the present disclosure.

The secondary battery has a high energy density and relatively good rate performance.

### BRIEF DESCRIPTION OF THE DRAWINGS

FIG. 1 is an x-ray diffraction (XRD) pattern of battery materials of Examples 1 to 3 of the present disclosure and Comparative Example 1.
FIG. 2 is a curve of specific capacity of batteries prepared from the battery materials of Examples 1 to 3 of the present disclosure and Comparative Example 1 as a function of the number of cycles.
FIG. 3 is a curve of charging and discharging voltage plateaus of batteries prepared from the battery materials of Examples 1 to 3 of the present disclosure and Comparative Example 1 as a function of the number of cycles.
FIG. 4 is a curve of specific capacity of batteries prepared from the battery materials of Examples 1 to 3 of the present disclosure and Comparative Example 1 as a function of the number of cycles.

### DETAILED DESCRIPTION

NASICON compounds are fast ion conductor materials with three-dimensional ion channels proposed by Professor Goodenough, and can be used as both electrode materials and solid electrolyte materials. To explain the beneficial effects of the present disclosure more clearly, the crystal structure of NASICON compounds is briefly described below by using Na₃V₂(PO₄)₃ (NVP for short) as an example.

Each structural element of the NVP material contains three PO₄ tetrahedrons and two VO₆ octahedrons, which are connected by common vertex oxygen atoms to form alkali metal ions (specifically sodium ions) that can accommodate two kinds of different oxygen environments, and form sodium ions. The sodium ions respectively occupy Na(1) and Na(2) positions. It is generally believed that only the sodium ions at the Na(2) position can be deintercalated or intercalated during charging and discharging, thus completing the lattice configuration transformation between depleted Na₃V₂(PO₄)₃ and fully-charged NaV₂(PO₄)₃. However, the crystal form transformation during charge and discharge cycles will cause the structural stability of the material to gradually decrease during charging and discharging, affecting the normal performance of the battery. In addition, the above material also has problems such as low electronic conductivity and low charging and charging voltage plateaus.

To solve the above problems, an embodiment of the present disclosure provides a battery material. A general molecular formula of the battery material includes A₃V₂₋ₓEₓ(P_{1-y}L_{y}O₄)₃, where the element E represents a doping element that substitutes the element V, and includes one or more of a transition metal element, a rare earth element, Mg, and Sr; the element L represents a doping element that substitutes the element P, and includes one or more of B, Al, Ga, Si, Ge, and Sn; the element A represents an alkali metal element; x and y respectively represent molar percentages of the doping elements, 0 ≤ x ≤ 1, and 0 < y ≤ 1/3; and when the element L is an element B, x is not 0.

The electronegativity of the element L is less than that of the element P, and 0 < y ≤ 1/3, i.e., L atoms substitute P atoms in some PO₄ tetrahedrons in some structural elements, so that the number of charges around the oxygen atoms in the original PO₄ tetrahedrons can be changed, to cause the ion radius of some of the oxygen atoms to shrink. Because the compound A₃V₂(P_{1-y}L_{y}O₄)₃ is a material of a skeleton structure, the unit cell volume of A₃V₂(P_{1-y}L_{y}O₄)₃ shrinks, so that the total energy of the unit cell structure of A₃V₂(P_{1-y}L_{y}O₄)₃ is reduced, thereby increasing the working voltage of the material and improving the structural stability of the material. In addition, the variation of the volume of A₃V₂(P_{1-y}L_{y}O₄)₃ during charging and discharging is small, and high structural stability can be maintained while maintaining high electronic conductivity. In addition, the PO₄ tetrahedrons and the VO₆ octahedrons are connected by common vertex oxygen atoms, so the doping of the element L causes a change in charges of the surrounding O atoms to force the charge environment around the V atoms to change, and induce a redox reaction of the element V at a high potential. As such, the working voltage of the material can be increased, thereby improving the energy density of the material. In addition, the doping element L can also significantly reduce the band gap value of the original material A₃V₂(PO₄)₃ to cause more electrons to accumulate near the Fermi surface, thereby improving the electronic conductivity of the material, improving the electrochemical kinetics during charging and discharging of the material, and further improving the rate performance of a secondary battery using the material. In addition, controlling the doping amount of the element L within the above range can enable the material to have high charging and charging voltage plateaus and good electronic conductivity while ensuring good structural stability of the material.

Further, when an appropriate amount of the element E is further used to dope at the V site of A₃V₂(P_{1-y}L_{y}O₄)₃, the charging and discharging voltage plateau of the obtained double-doped material can be further increased compared with the singly-doped A₃V₂(P_{1-y}L_{y}O₄)₃ by a synergistic effect of the doping of the element E at the V site and the doping of the element L at the P site.

In some embodiments of the present disclosure, the element A includes, but is not limited to, one or more of Li, Na, or K. The element A may be selected depending on the specific type of the secondary battery. For example, when the battery material A₃V₂₋ₓEₓ(P_{1-y}L_{y}O₄)₃ is used in a sodium secondary battery, the element A may be Na.

In some embodiments of the present disclosure, the element L includes, but is not limited to, one or more of Si, Ge, and Sn. The use of the above element for doping at the phosphorus site makes the preparation process more controllable, improves the product yield, and makes the performance of the prepared battery material more stable.

In some embodiments of the present disclosure, the element L is an element Si and/or an element B. Generally, a theoretical specific capacity C of a material is calculated according to the following formula: C = (F × n × m)/(t × M), where F is Faraday constant, n is the number of electrons lost when the active material A₃V₂₋ₓEₓ(P_{1-y}L_{y}O₄)₃ (where x may be 0) is converted into AV₂₋ₓEₓ(P_{1-y}L_{y}O₄)₃ (where x may be 0) during charging, m is the mass of the fully charged active material A₃V₂₋ₓEₓ(P_{1-y}L_{y}O₄)₃, t is time, and M is the molar mass of A₃V₂₋ₓEₓ(P_{1-y}L_{y}O₄)_{3.} It can be seen that when the molar mass M of the active material A₃V₂₋ₓEₓ(P_{1-y}L_{y}O₄)₃ decreases, the theoretical specific capacity C increases. Because the atomic mass of the element Si and the atomic mass of the element B are less than the atomic mass of the element P, substituting some of the element P with Si and B can increase the theoretical specific capacity of the material, thereby further improving the energy density of the material.

In some embodiments of the present disclosure, a value range of y is: 1/18 ≤ y ≤ 1/6. Controlling the doping amount of the element L within the above range can sufficiently reduce the risk of excessive change of the unit cell structure of the original compound A₃V₂(PO₄)₃ caused by the doping of the element L, and facilitates the preparation. Moreover, the variations of lattice constants (including the unit cell volume) during the crystal configuration transformation between the material A₃V₂₋ₓEₓ(P_{1-y}L_{y}O₄)₃ (where x may be 0) doped with the element L and its corresponding fully charged compound through intercalation/deintercalation of A ions in the charging and discharging process are small, and the risk of structural collapse of the material doped with the element L is small in the charging and discharging cycles, so that the good cycle performance of the material can be ensured while achieving good conductivity of the material.

In some other embodiments of the present disclosure, a value range of y is: 1/6 ≤ y ≤ 1/3. By controlling the doping amount of the element L within the above range, the working voltage can be more significantly increased. In addition, good conductivity of the material can be achieved.

In some embodiments of the present disclosure, y is 1/18. In this case, the material A₃V₂₋ₓEₓ(P_{1-y}L_{y}O₄)₃ (where x may be 0) material has very high crystallinity. In some other embodiments, y is 1/6. In this case, the material A₃V₂₋ₓEₓ(P_{1-y}L_{y}O₄)₃ has a high working voltage, good structural stability, and good electronic conductivity. In some other embodiments, y is 1/3. In this case, the material A₃V₂₋ₓEₓ(P_{1-y}L_{y}O₄)₃ (where x may be 0) has a highest working voltage and good electronic conductivity.

In some embodiments of the present disclosure, the transition metal element includes, but is not limited to, one or more of Fe, Cr, Mn, Co, Ti, Ni, Cu, Zn, Mo, Nb, and Zr.

In some embodiments of the present disclosure, the rare earth element includes, but is not limited to, La and/or Ce.

In some embodiments of the present disclosure, the element E includes one or more of Mg, Sr, Cr, Mn, Fe, Co, Ni, Cu, Zn, Ti, Mo, Nb, and Zr. The cost of these elements is lower than that of lanthanide elements La and Ce. The ionic radii of Cr, Mn, Fe, Co, Ni, Cu, and Zn are slightly smaller than that of V ions, and doping with such elements can reduce the unit cell volume of A₃V₂(PO₄)₃, thereby further improving the structural stability of the material. In some other embodiments of the present disclosure, to better balance the cost of the element E and the impact on the operating voltage of the material, the element E may be one or more of Ti, Cr, Mn, and Fe. These elements are also helpful to increase the operating voltage of doped materials. Fe has the lowest cost, and Mn is more conducive to increasing the charging and discharging voltages of the material.

In some specific embodiments, the element E is Mn, and the element L is Si. The yield of A₃V₂₋ₓMnₓ(P_{1-y}Si_{y}O₄)₃ is high, and the prepared material has a high working voltage and therefore a high energy density.

In some embodiments of the present disclosure, x is preferably in a range of 0.1 ≤ x ≤ 1. Controlling the doping amount of the element E within the above range can avoid the loss of the electrochemical activity of A₃V₂₋ₓEₓ(P_{1-y}L_{y}O₄)₃ caused by an excessive doping amount of E, and can ensure that the doping with the element E can improve the electrochemical performance of the material.

An embodiment of the present disclosure provides a preparation method for a battery material, including:
weighing an A source, a vanadium source, an E source, a phosphorus source, and an L source according to a general molecular formula A₃V₂₋ₓEₓ(P_{1-y}L_{y}O₄)₃ of a battery material to be prepared, and mixing the sources to obtain a precursor material, where the element E represents a doping element that substitutes the element V, and includes one or more of a transition metal element, Mg, and Sr; the element L represents a doping element that substitutes the element P, and includes one or more of B, Al, Ga, Si, Ge, and Sn; the element A represents an alkali metal element; x and y respectively represent a molar percentage of the element V substituted by the doping element and a molar percentage of the element P substituted by the doping element, where 0 ≤ x ≤ 1, and 0 < y ≤ 1/3; and when the element L is an element B, x is not 0; and
calcining the precursor material under an inert gas atmosphere to obtain the battery material.

According to the above preparation method, the battery material provided in the embodiment of the present disclosure can be obtained by mixing the raw materials according to a preset ratio to obtain a precursor material and then calcining the mixed raw materials. The preparation method has the advantages of simple operation and high process controllability, and can realize large-scale industrial preparation.

In some embodiments of the present disclosure, the A source, the vanadium source, the E source, the phosphorus source, and the L source are weighed according to a molar ratio of A:V:E:P:L=3:(2-x):x:(3-3y):3y, and mixed. In some embodiments, to make up for the loss of the alkali metal element A during the preparation process, the element A may be in excess of 10%.

In some embodiments of the present disclosure, the mixing includes, but is not limited to, a solid phase mixing method or a sol-gel method.

Specifically, the solid phase mixing method may be: mixing the A source, the vanadium source, the E source, the phosphorus source, and the L source in proportion in a ball mill to obtain the precursor material.

Specifically, the sol-gel method may be: adding the A source, the vanadium source, the E source, the phosphorus source, and the L source into a solvent in proportion, heating and fully stirring the mixture to produce a gel, and continuing to heat and stir the gel to evaporate off the solvent to obtain the precursor material. The heating and stirring are performed at 30°C to 200°C with a stirring speed of 300 rpm to 900 rpm for 1 h to 6 h.

In the present disclosure, the solvent is a volatile solvent, and specifically may be one or more of water, ethanol, and acetone.

In some embodiments of the present disclosure, conditions of the calcining include: calcining the precursor material under an inert gas atmosphere at 400°C to 900°C for 10 h to 30 h.

In the present disclosure, the inert gas is specifically at least one of argon, nitrogen, or helium.

In the present disclosure, the A source (where the element A is at least one of Li, Na, or K) may be at least one of a nitrate, an oxalate, an acetate, and an acetylacetonate of the element A. For example, when the element A is Na, the Na source may be at least one of sodium nitrate, sodium oxalate, sodium acetate, and sodium acetylacetonate.

In the present disclosure, the vanadium source includes, but is not limited to, at least one of a vanadium source in which the vanadium element is trivalent, tetravalent, or pentavalent in the compound. For example, the vanadium source may be at least one of vanadium pentoxide, vanadium tetroxide, vanadium trioxide, ammonium metavanadate, sodium metavanadate, vanadium acetylacetonate, vanadyl acetylacetonate, etc.

In the present disclosure, the E source is a compound familiar to those skilled in the art. For example, the E source is at least one of an organometallic salt, a metallic acid salt, and a metal oxide of a specific element corresponding to the element E. For example, when the element E is element Ti, the E source may be at least one of titanium oxide, tetrabutyl titanate, titanium tetraisopropoxide, titanium ethoxide, etc.

In the present disclosure, the phosphorus source may be at least one of phosphoric acid, sodium phosphate, sodium dihydrogen phosphate, disodium hydrogen phosphate, ammonium dihydrogen phosphate, diammonium hydrogen phosphate, ammonium phosphate, etc.

In the present disclosure, the L source may be at least one of an acid, an ester, or a salt of a specific doping element corresponding to the element L. For example, when the element L is element Si, the L source may be tetraethyl silicate, sodium silicate, etc.

An embodiment of the present disclosure provides an electrode. The electrode includes the battery material described above.

The electrode can be used to provide a secondary battery having excellent electrochemical performance such as high energy density and good rate performance.

In some embodiments of the present disclosure, the electrode is a positive electrode. The positive electrode generally includes a positive electrode current collector and a positive electrode active material layer arranged on at least one surface of the positive electrode current collector. The positive electrode active material layer contains the positive electrode active material described above. In addition, the positive electrode active material layer may further contain a binder, and optionally a conductive agent. The binder and the conductive agent may be conventional choices in the battery field.

The positive electrode current collector may be various materials suitable for use as a current collector of a positive electrode, and includes, but is not limited to, a metallic elemental foil, an alloy foil, a metal-plated polymer film, or any of the above materials coated with carbon on a surface thereof, etc. The metallic elemental foil may be an aluminum foil. The alloy foil may be an aluminum alloy foil. The metal plated on the surface of the polymer film may be an aluminum elemental layer or an aluminum alloy layer.

An embodiment of the present disclosure further provides a secondary battery. The secondary battery includes the electrode or the battery material described above. Specifically, the secondary battery may be a lithium secondary battery, a sodium secondary battery, or a potassium secondary battery. Because the secondary battery includes AV₂₋ₓEₓ(P_{1-y}L_{y}O₄)₃ described above, the secondary battery has high energy density, good rate performance, good cycle performance, etc. The secondary battery can be used in 3C electronic products (such as mobile phones, tablet computers, etc.), vehicles (such as automobiles, boats, etc.) or other electrical devices to improve the performance and market competitiveness of the electrical devices.

The secondary battery may be a liquid-state battery using a liquid electrolyte, or a semi-solid-state or solid-state battery using a semi-solid-state or solid-state electrolyte. In some embodiments, the secondary battery may include the positive electrode described above, a negative electrode, and a separator and an electrolyte solution between the positive electrode and the negative electrode. In some other embodiments, the secondary battery may include the positive electrode, a negative electrode, and a semi-solid or solid electrolyte between the positive electrode and the negative electrode. In particular, the battery material provided by the embodiments of the present disclosure may be used as the semi-solid or solid electrolyte. In addition, when the semi-solid or solid electrolyte is used, the positive electrode and the negative electrode may further include a semi-solid electrolyte material or a solid electrolyte material.

The technical solutions of the present disclosure will be further described in detail below through multiple examples.

### Example 1

A battery material was prepared according to the following operations.

Sodium nitrate as a sodium source, vanadium pentoxide as a vanadium source, phosphoric acid as a phosphorus source, and tetraethyl silicate as a Si source were weighed according to a molar ratio of Na:V:P:Si=3:2:2.84:0.17, and added to ethanol as a solvent. The mixture was heated and stirred at 80°C to evaporate off the solvent to obtain a precursor material.

The precursor material was calcined under a protective nitrogen atmosphere at 800°C for 12 h to obtain a battery material Na₃V₂(P_{17/18}Si_{1/18}O₄)₃.

### Example 2

This example was the same as Example 1 except that the content of the silicon source was slightly adjusted. The general molecular formula of the prepared battery material was Na₃V₂(P_{5/6}Si_{1/6}O₄)₃.

### Example 3

This example was the same as Example 1 except that the content of the silicon source was slightly adjusted. The general molecular formula of the prepared battery material was Na₃V₂(P_{2/3}Si_{1/3}O₄)₃.

### Example 4

This example was the same as Example 1 except that the content of the silicon source was slightly adjusted. The general molecular formula of the prepared battery material was Na₃V₂(P_{0.97}Si_{0.03}O₄)₃.

### Example 5

This example was the same as Example 1 except that the silicon source was replaced with a Ge source which was germanium dioxide, and the preparation process was slightly adjusted. The general molecular formula of the prepared battery material was Na₃V₂(P_{17/18}Ge_{1/18}O₄)₃.

### Example 6

This example was the same as Example 1 except that the silicon source was replaced with a Sn source which was tin oxide, and the preparation process was slightly adjusted. The general molecular formula of the prepared battery material was Na₃V₂(P_{17/18}Sn_{1/18}O₄)₃.

### Example 7

(1) Sodium nitrate as a sodium source, vanadium pentoxide as a vanadium source, manganese dioxide as a Mn source, phosphoric acid as a phosphorus source, and tetraethyl silicate as a Si source were weighed according to a molar ratio of Na:V:Mn:P:Si=3:1.5:0.5:2.84:0.17, and fed to a ball mill and mixed to obtain a precursor material.
(2) The precursor material was calcined under a protective nitrogen atmosphere at 800°C for 12 h to obtain a battery material Na₃V_{1.5}Mn_{0.5}(P_{17/18}Si_{1/18}O₄)₃.

### Example 8

This example was the same as Example 6 except that the content of the Mn source was slightly adjusted, and the general molecular formula of the prepared battery material was Na₃V_{1.8}Mn_{0.2}(P_{17/18}S_{1/18}O₄)₃.

### Example 9

This example was the same as Example 6 except that the Mn source was replaced with a Fe source which was ferrous oxide, and the preparation process was slightly adjusted. The general molecular formula of the prepared battery material was Na₃V_{1.5}Fe_{0.5}(P_{17/18}Si_{1/18}O₄)₃.

### Example 10

This example was the same as Example 6 except that the Mn source was replaced with a Ti source which was titanium oxide, and the preparation process was slightly adjusted. The general molecular formula of the prepared battery material was Na₃V_{1.5}Ti_{0.5}(P_{17/18}Si_{1/18}O₄)₃.

### Example 11

This example was the same as Example 6 except that the Mn source was replaced with a Cr source which was chromium oxide, and the preparation process was slightly adjusted. The general molecular formula of the prepared battery material was Na₃ V_{1.5}Cr_{0.5}(P_{17/18}Si_{1/18}O₄)₃.

### Example 12

This example was the same as Example 6 except that the Si source was replaced with a B source which was sodium tetraborate, and the content of the Na source and the subsequent preparation process were slightly adjusted. The general molecular formula of the prepared battery material was Na₃V_{1.5}Mn_{0.5}(P_{17/18}B_{1/18}O₄)₃.

### Example 13

This example was the same as Example 6 except that potassium nitrate was further added as a potassium source, and the content of the Na source and the subsequent preparation process were slightly adjusted. The general molecular formula of the prepared battery material was Na₂K₁V_{1.5}Mn_{0.5}(P_{17/18}Si_{1/18}O₄)₃.

### Example 14

This example was the same as Example 1 except that the Na source was replaced with a Li source which was lithium nitrate. The general molecular formula of the prepared battery material was Li₃V₂(P_{17/18}Si_{1/18}O₄)₃.

### Comparative Example 1

A battery material was prepared. The general molecular formula of the battery material was Na₃V₂(PO₄)₃.

### Comparative Example 2

A battery material was prepared. The general molecular formula of the battery material was Na₃V_{1.5}Fe_{0.5}(PO₄)₃.

### Comparative Example 3

A battery material was prepared. The general molecular formula of the battery material was Na₃V₂(P_{17/18}B_{1/18}O₄)₃.

### Performance Test

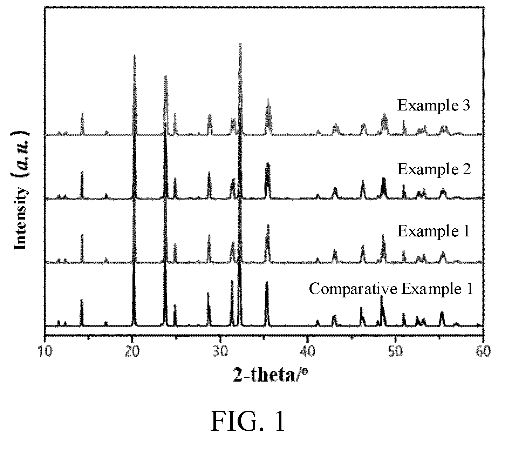

(1) Characterization of the crystal structure of the material: The battery materials of Examples 1-3 and Comparative Example 1 are characterized by XRD. The results are as shown in FIG. 1.
(2) Electronic conductivity of the battery materials of the examples and comparative examples: The powder to be tested was placed in a powder resistivity tester. A pressure of 50 MPa was applied and held for 10s. The powder resistivity was measured by a 4-probe method, and could be converted into electronic conductivity (where electronic conductivity is the reciprocal of resistivity).
(3) To further strongly support the beneficial effects of the embodiments of the present disclosure, the materials of the examples and comparative examples were made into batteries, and electrochemical performance tests were carried out. The related results are shown in Table 2.

The preparation process of the battery is as follows: ① Preparation of positive electrode: The battery material of each example or comparative example, a conductive agent which was acetylene black, and a binder which was polyvinylidene fluoride (PVDF) were added to a solvent which was NMP (N-methylpyrrolidone) at a mass ratio of 88:6:6, and evenly stirred to obtain a positive electrode slurry. The positive electrode slurry was coated on an aluminum foil serving as a positive electrode current collector, dried, rolled, and cut to obtain a positive electrode. ② Preparation of negative electrode: A negative electrode active material (which was specifically graphite) and a binder (which was specifically a mixture of styrene-butadiene rubber (SBR) and sodium carboxymethyl cellulose (CMC-Na) at a mass ratio of 2:3) were mixed in ionized water at a mass ratio of 95:5, and evenly stirred to obtain a negative electrode slurry. The negative electrode slurry was coated on a copper foil serving as a negative electrode current collector, dried, rolled, and cut to obtain a negative electrode. ③ Battery assembly: The positive electrode, a separator, and the negative electrode are alternately laminated to obtain a battery core. The battery core was wound and placed in an outer packaging foil which was an aluminum plastic film, and an electrolyte solution was injected, followed by vacuum packaging, standing, formation, shaping, and other processes, to complete the preparation of a sodium battery. Secondary sodium batteries prepared from the battery materials of the examples and comparative examples were denoted as S1-S14 and DS1-DS3, respectively.

The batteries S1-S14 and DS1-DS3 were tested for electrochemical performance.
1) Cycle performance A charge-discharge cycle test was performed for each battery at 25°C and at a current of 0.5C, and the voltage range was 2.5 V to 4.3 V. During charging, the battery was first charged at a constant current of 0.5C to a cut-off voltage of 4.3 V, and then charged at a constant voltage to a cut-off current of 0.05 C. During discharging, the battery was discharged to 2.5 V at a constant current of 0.5C. The first cycle specific discharge capacity and the capacity retention rate after 50 cycles of each cell were recorded. The first cycle specific discharge capacity is equal to the ratio of the first cycle discharge capacity of each button cell to the mass of the positive electrode active material in the cell. The capacity retention rate after 50 cycles is equal to the ratio of the discharge capacity after 50 cycles to the first cycle discharge capacity.

In addition, for the charge and discharge curve obtained by charging and discharging each battery at the constant current of 0.5C, and the discharge curve was integrated and divided by the first cycle discharge capacity to obtain an average voltage of each battery, i.e., a charging and discharging voltage plateau.

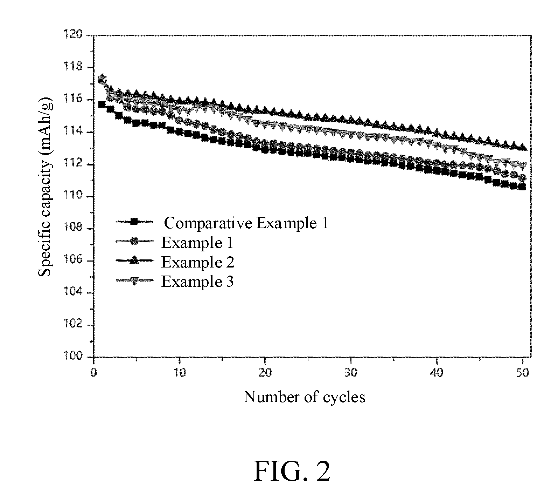

The related results are summarized in Table 2, and the cycle curves of some examples and comparative examples are summarized in FIG. 2.

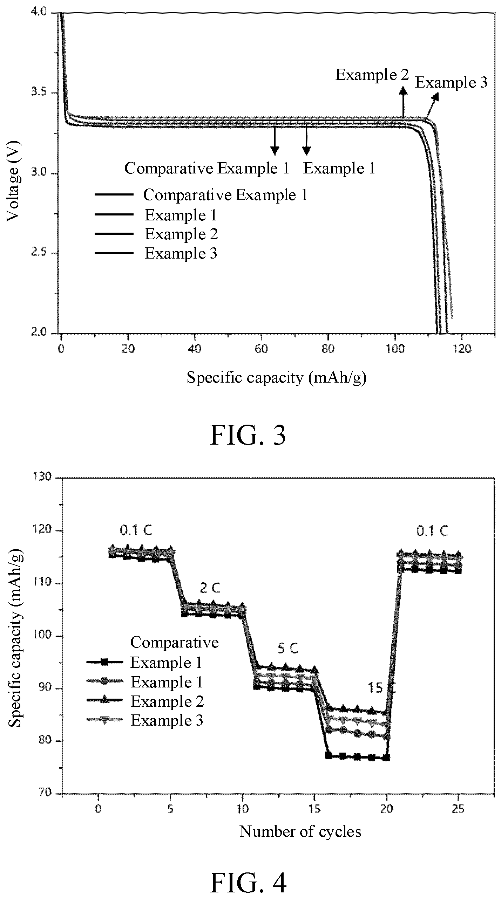

2) Rate performance The change of discharge gram capacity of each battery with the number of cycles at different rates such as 0.1C, 2C, 5C, and 15C was tested at 25°C, and the voltage range was 2.5 V to 4.3 V The rate performance curves of some examples and comparative examples are as shown in FIG. 4. For the calculation of the gram capacity, the ratio of the discharge capacity at a current density to the mass of the positive electrode active material is used as the discharge gram capacity at the current density. Table 2 shows the first cycle specific discharge capacity at 15C, and the ratio of the first cycle discharge capacity at 15C to the first cycle discharge capacity at 0.1C of each battery.

**Table 1 Summary of electronic conductivity of materials of the examples and comparative examples**

| Experiment No. | General molecular formula of battery material | Electronic conductivity (µS/cm) |
|---|---|---|
| Example 1 | Na₃V₂(P_{17/18}Si_{1/18}O₄)₃ | 9.9 |
| Example 2 | Na₃V₂(P_{5/6}Si_{1/6}O₄)₃ | 10.2 |
| Example 3 | Na₃V₂(P_{2/3}Si_{1/3}O₄)₃ | 11.1 |
| Example 4 | Na₃V₂(P_{0.97}Si_{0.03}O₄)₃ | 8.8 |
| Example 5 | Na₃V₂(P_{17/18}Ge_{1/18}O₄)₃ | 8.9 |
| Example 6 | Na₃V₂(P_{17/18}Sn_{1/18}O₄)₃ | 9.0 |
| Example 7 | Na₃V_{1.5}Mn_{0.5}(P_{17/18}Ge_{1/18}O₄)₃ | 9.8 |
| Example 8 | Na₃V_{1.8}Mn_{0.2}(P_{17/18}Si_{1/18}O₄)₃ | 9.5 |
| Example 9 | Na₃V_{1.5}Fe_{0.5}(P_{17/18}Si_{1/18}O₄)₃ | 12.6 |
| Example 10 | Na₃V_{1.5}Ti_{0.5}(P_{17/18}Si_{1/18}O₄)₃ | 12.7 |
| Example 11 | Na₃V_{1.5}Cr_{0.5}(P_{17/18}Si_{1/18}O₄)₃ | 12.3 |
| Example 12 | Na₃V_{1.5}Mn_{0.5}(P_{17/18}B_{1/18}O₄)₃ | 9.4 |
| Example 13 | Na₂K₁V_{1.5}Mn_{0.5}(P_{17/18}Si_{1/18}O₄)₃ | 9.6 |
| Example 14 | Li₃V₂(P_{17/18}Si_{1/18}O₄)₃ | 9.6 |
| Comparative Example 1 | Na₃V₂(PO₄)₃ | 8.7 |
| Comparative Example 2 | Na₃V_{1.5}Fe_{0.5}(PO₄)₃ | 12.0 |
| Comparative Example 3 | Na₃V₂(P_{17/18}B_{1/18}O₄)₃ | 9.0 |

**Table 2 Summary of electrochemical performance of batteries of the examples and comparative examples**

| Battery No. | General molecular formula of positive electrode active material of battery | Charging and charging voltage plateaus (V) | Battery specific capacity (mAh/g) | Capacity retention rate after 50 cycles (%) | First cycle specific discharge capacity at 15C (mAh/g) | Ratio of first cycle discharge capacity at 15C to first cycle discharge capacity at 0.1C |
|---|---|---|---|---|---|---|
| S1 | Na₃V₂(P_{17/18}Si_{1/18}O₄)₃ | 3.31 | 116.11 | 95.69% | 80.89 | 69.67% |
| S2 | Na₃V₂(P_{5/6}Si_{1/6}O₄)₃ | 3.33 | 116.54 | 96.97% | 85.42 | 73.30% |
| S3 | Na₃V₂(P_{2/3}Si_{1/3}O₄)₃ | 3.35 | 116.325 | 96.20% | 83.12 | 71.45% |
| S4 | Na₃V₂(P_{0.97}Si_{0.03}O₄)₃ | 3.30 | 114.98 | 95.98% | 80.25 | 68.12% |
| S5 | Na₃V₂(P_{17/18}Ge_{1/18}O₄)₃ | 3.33 | 114.12 | 95.70% | 84.21 | 73.79% |
| S6 | Na₃V₂(P_{17/18}Sn_{1/18}O₄)₃ | 3.31 | 114.09 | 95.56% | 81.21 | 70.45% |
| S7 | Na₃V_{1.5}Mn_{0.5}(P_{17/18}Si_{1/18}O₄)₃ | 3.62 | 113.15 | 94.53% | 78.12 | 67.92% |
| S8 | Na₃V_{1.8}Mn_{0.2}(P_{17/18}Si_{1/18}O₄)₃ | 3.57 | 114.21 | 95.10% | 79.24 | 68.51% |
| S9 | Na₃V_{1.5}Fe_{0.5}(P_{17/18}Si_{1/18}O₄)₃ | 3.32 | 113.21 | 94.38% | 78.22 | 67.98% |
| S10 | Na₃V_{1.5}Ti_{0.5}(P_{17/18}Si_{1/18}O₄)₃ | 3.35 | 116.22 | 97.46% | 82.21 | 73.87% |
| S11 | Na₃V_{1.5}Cr_{0.5}(P_{17/18}Si_{1/18}O₄)₃ | 3.34 | 113.12 | 95.98% | 82.13 | 72.98% |
| S12 | Na₃V_{1.5}Mn_{0.5}(P_{17/18}B_{1/18}O₄)₃ | 3.63 | 115.65 | 95.98% | 77.24 | 69.57% |
| S13 | Na₂K₁V_{1.5}Mn_{0.5}(P_{17/18}Si_{1/18}O₄)₃ | 3.63 | 114.21 | 95.95% | 79.55 | 69.62% |
| S14 | Li₃V₂(P_{17/18}Si_{1/18}O₄)₃ | 3.30 | 117.12 | 95.12% | 79.56 | 68.55% |
| DS1 | Na₃V₂(PO₄)₃ | 3.27 | 115.698 | 93.49% | 76.85 | 66.42% |
| DS2 | Na₃V_{1.5}Fe_{0.5}(PO₄)₃ | 3.29 | 112.54 | 92.12% | 72.44 | 64.37% |
| DS3 | Na₃V₂(P_{17/18}B_{1/18}O₄)₃ | 3.29 | 115.66 | 94.89% | 76.12 | 66.03% |

First, it can be clearly seen from FIG. 2 to FIG. 4 that after doping at the P site of Na₃V₂(PO₄)₃, the highest specific capacity released by the battery material was significantly higher than that of an undoped material, and the capacity retention rate was also improved, showing good cycle performance. In addition, the charging and discharging voltage plateaus of Examples 1 to 3 were also significantly improved compared with that of Comparative Example 1. It can be seen that in the case of doping at only the phosphorus site, the larger the doping amount (where y was less than or equal to 1/3), the higher the charging and discharging plateau voltage of the battery. In addition, the battery capacity of Examples 1 to 3 at high current density (5C and 15C) was significantly higher than that of Comparative Example 1, and the undoped material showed a severe capacity decrease as the current density gradually increased. In contrast, the material with doping at the P site showed good rate performance.

It can be seen from the data in Table 2 that for the doping of the same element L, the larger the doping amount at the phosphorus site, the higher the charging and discharging voltage plateau of the material. Compared with the battery of Comparative Example 1, it can be found that the rate performance, cell specific capacity, and cycling capacity retention rate of the material with doping at the phosphorus site were significantly higher than those of Na₃V₂(PO₄)₃. The introduction of doping at the vanadium site on the basis of doping at the phosphorus site can further increase the charging and discharging voltage plateau of the material, but the doping effect varies slightly with different elements E.

While exemplary embodiments of the present disclosure have been described above, the present disclosure is not limited thereto. It should be appreciated that some improvements and modifications can be made by those skilled in the art without departing from the technical principles of the present disclosure, which are also contemplated to be within the scope of the present disclosure.

## Claims

1. A battery material, a general molecular formula of the battery material comprising A₃V₂₋ₓEₓ(P_{1-y}L_{y}O₄)₃, wherein the element E represents a doping element that substitutes the element V, and comprises at least one of a transition metal element, a rare earth element, Mg, and Sr; the element L represents a doping element that substitutes the element P, and comprises at least one of B, Al, Ga, Si, Ge, and Sn; the element A represents an alkali metal element; 0 ≤ x ≤ 1, and 0 < y ≤ 1/3; and when the element L is an element B, x is not 0.

2. The battery material according to claim 1, wherein the element L comprises at least one of Si, Ge, and Sn.

3. The battery material according to claim 1 or 2, wherein the transition metal element comprises at least one of Fe, Cr, Mn, Co, Ti, Ni, Cu, Zn, Mo, Nb, and Zr; and the rare earth element comprises at least one of La and Ce.

4. The battery material according to any one of claims 1 to 3, wherein a value range of x is: 0.1 ≤ x ≤ 1.

5. The battery material according to any one of claims 1 to 4, wherein a value range of y is: 1/18 ≤ y ≤ 1/3.

6. A preparation method for a battery material, comprising:
weighing an A source, a vanadium source, an E source, a phosphorus source, and an L source according to a general molecular formula A₃V₂₋ₓEₓ(P_{1-y}L_{y}O₄)₃ of a battery material to be prepared, and mixing the sources to obtain a precursor material, wherein the element E represents a doping element that substitutes the element V, and comprises at least one of a transition metal element, a rare earth element, Mg, and Sr; the element L represents a doping element that substitutes the element P, and comprises at least one of B, Al, Ga, Si, Ge, and Sn; the element A represents an alkali metal element; 0 ≤ x < 1, and 0 < y ≤ 1/3; and when the element L is an element B, x is not 0; and
calcining the precursor material to obtain the battery material.

7. The preparation method according to claim 6, wherein conditions of the calcining comprise:
calcining the precursor material under an inert gas atmosphere at 400°C to 900°C for 10 h to 30 h.

8. The preparation method according to claim 7, wherein the inert gas comprises at least one of argon, nitrogen, and helium.

9. The preparation method according to any one of claims 6 to 8, wherein, the mixing comprises a solid phase mixing method or a sol-gel method.

10. The preparation method according to any one of claims 6 to 9, wherein, the element L comprises at least one of Si, Ge, and Sn.

11. The preparation method according to any one of claims 6 to 10, wherein, the transition metal element comprises at least one of Fe, Cr, Mn, Co, Ti, Ni, Cu, Zn, Mo, Nb, and Zr; and the rare earth element comprises at least one of La and Ce.

12. The preparation method according to any one of claims 6 to 11, wherein, a value range of x is: 0.1 < x < 1.

13. The preparation method according to any one of claims 6 to 12, wherein, a value range of y is: 1/18 ≤ y ≤ 1/3.

14. A secondary battery, comprising the battery material according to any one of claims 1 to 5.
